# EUROPÄISCHE PATENTSCHRIFT

(11) **EP 0 755 966 B1**
(45) Veröffentlichungstag und Bekanntmachung des Hinweises auf die Patenterteilung: **12.12.2001**
(21) Anmeldenummer: 96111535.9
(22) Anmeldetag: 17.07.1996
(51) Int. Cl.: C08J 5/04, C08G 69/18

(54) **Thermoplastisch verformbare Verbundwerkstoffe**
Thermoplastic thermoformable composites
Composites thermoplastiques thermoformables

(30) Priorität: 25.07.1995 DE 19527154
(43) Veröffentlichungstag der Anmeldung: 29.01.1997
(73) Patentinhaber: EMS-INVENTA AG, 8002 Zürich (CH)
(72) Erfinder: Leimbacher, Roland, Dipl.-Chem. HTL, 7013 Domat/Ems (CH); Schmid, Eduard, Dr.sc.nat., 7402 Bonaduz (CH)
(74) Vertreter: Becker Kurig Straus

(56) Entgegenhaltungen:
- EP-A- 0 408 957
- EP-A- 0 524 509
- DE-A- 2 064 598
- DATABASE WPI Section Ch, Week 8929 Derwent Publications Ltd., London, GB; Class A32, AN 89-209321 XP002016204 & JP-A-01 145 111 (TOYOTA JIDOSHA KK) , 7.Juni 1989
- DATABASE WPI Section Ch, Week 9416 Derwent Publications Ltd., London, GB; Class A23, AN 94-132106 XP002016205 & JP-A-06 080 790 (SUMITOMO CHEM CO LTD) , 22.März 1994
- DATABASE WPI Section Ch, Week 8807 Derwent Publications Ltd., London, GB; Class A23, AN 88-047245 XP002016206 & JP-A-63 005 911 (MITSUBISHI MONSANTO KK) , 11.Januar 1988
- DATABASE WPI Section Ch, Week 8342 Derwent Publications Ltd., London, GB; Class A23, AN 83-791730 XP002016207 & JP-A-58 152 049 (MITSUBISHI RAYON KK) , 9.September 1983
- DATABASE WPI Section Ch, Week 9014 Derwent Publications Ltd., London, GB; Class A95, AN 90-103137 XP002016208 & JP-A-02 053 685 (SUMITOMO RUBBER IND KK) , 22.Februar 1990

## Beschreibung

Die Erfindung betrifft den in den Patentansprüchen angegebenen Gegenstand.

Die Erfindung betrifft insbesondere dimensionsstabile, schwundarme, thermoplastisch verformbare Verbundwerkstoffe aus Verstärkungsfasern in einer Polyamid 12-Matrix, ein Verfahren zur Herstellung dieser Verbundwerkstoffe bzw. Formkörper sowie deren Verwendung.

Verbundwerkstoffe aus Verstärkungsfasern der geschilderten Art und einer Kunststoffmatrix, sind heute wesentliche Elemente im Schienen- und Straßenfahrzeugbau, im Flugzeug- und Schiffbau, wo es um Gewichtsersparnis geht, sowie im Leichtbau für Bedachungen, Verstärkungen von Baukonstruktionen und bei hohen Beschleunigungskräften unterliegenden Maschinenteilen, z.B. in der Webetechnik oder in Sportgeräten wie Tennis- und Golf-Schlägern oder Pfeilen.

Grundprinzip dabei ist, Imprägnation der Filamentgebilde wie orientierte Kabelstränge, Gewebe, Gestricke, Geflechte und Gesticke mit einer hochfliessfähigen, insbesondere thermisch aktivierten Schmelze aus Monomer u/o Oligomer u/o Präpolymer mit anschliessender Formgebung und Aushärtung unter Hitze- und Druckeinwirkung.

Üblich dabei sind z.B. Epoxidharz und härtbare Polyestersysteme, wobei eine duroplastische Matrix vorliegt; d.h. das Teil ist nicht nachformbar.

Wählt man Thermoplaste wie PEEK, Polypropylen oder auch Polyamid als Matrix der Filamentgebilde, so erweist sich deren Benetzung und Imprägnation aufgrund der zu hohen Schmelzeviskosität als ausserordentlich schwierig.

Im allgemeinen muss unter hohem Druck und bei hoher Temperatur gearbeitet werden. Trotzdem werden oft die Filamente im Innern der Faserkabel nicht oder nur ungenügend benetzt, und die Entfernung von Gaseinschlüssen ist oft kaum möglich.

Es lag daher nahe, nach thermoplastischen Systemen zu suchen, die aus einer dünnflüssigen, gut faserbenetzenden Vorstufe bestehen, welche dann unter Hitzeeinwirkungen in kurzer Zeit zur Matrixbildung führen.

Diese Matrix soll dann in einem zweiten Verfahrensschritt durch Erhitzen auf eine Temperatur oberhalb ihres Schmelzpunktes in die Endform gebracht werden können, wobei auch thermisches Verschweissen, mit einem dieselbe Matrix enthaltenden Bauteil, möglich sein soll.

In US-A-4,635,432 ist ein Verfahren beschrieben, in dem eine dünnflüssige Polymervorstufe ein vorerhitztes Faserkabel benetzt, imprägniert und umhüllt, wofür ein beheiztes Werkzeug, definierter Länge, verwendet wird.

Als Präpolymersystem sind 2 Komponenten, Polyurethan und das Polyätherblöcke enthaltende Nyrim PA-6 System aufgeführt.

In der EP 0 384 063 A1 ist dieses Verfahren, bezogen auf einen Pultrusionsprozess, beschrieben und beispielhaft als Polymervorstufe anionisch- und cokatalytisch aktivierte Laktam 6-Schmelze von 80°C beschrieben. Bei Imprägnation und Formgebung im Werkzeug ist die Temperatur auf 150 - 170°C angehoben, so dass die Schmelze direkt ins feste Polymer übergeht.

Als eine Hauptanwendung wird das resultierende Faserkabel zu langfaserhaltigen Granulaten zerkleinert, die anschliessend im Spritzguss verarbeitet werden können.

In der EP 0 491 043 A1 ist ein ähnliches Verfahren, basierend auf einem Laktam 6-System beschrieben, in dem das imprägnierte Faserkabel in einem Umhüllsystem aus Fluorpolymer auspolymerisiert und verfestigt wird. Die Verarbeitung der langglasverstärkten Granulate erfolgt wieder im Spritzguss.

In der EP 0 373 666 A2 ist ein spezieller Pultrusionsprozess beschrieben, der zu nachformbaren Teilen führt, da als Matrix Thermoplaste beschrieben sind.

Zur Imprägnation der Fasern wird vorgeschlagen, die Faserkabel durch ein Wirbelbett aus Thermoplastpulver oder durch eine wässerige Suspension des Thermoplastpulvers zu führen.

In der Praxis dürfte sich das Verfahren als ausserordentlich aufwendig erweisen, ist doch bekannt, dass sich Thermoplaste nur mit unverhältnismässigem Aufwand auf eine geeignete Korngrösse, die nicht stark vom Durchmesser der Filamente abweichen sollte, zerkleinern lassen. Auch ist es mit diesem Verfahren schwierig, eine Impragnätion mit konstantem Gewichtsanteil an Matrix zu erreichen.

Auch die EP 0 281 447 A1 basiert auf der "Fluid-Bett-Imprägnation" von Glasfaserkabeln mit Polyamidpulver, wobei ein spezieller beheizter Formgebungskopf eingesetzt wird und ein plattenförmiges Profil resultiert.

EP 0 544 049 A1 beschreibt einen Pultrusionsprozess, bei dem zur Imprägnation der Faserkabel aktivierte Laktamschmelze (PA 6) verwendet wird, und die Temperatur im Werkzeug mindestens in den Schmelzbereich des Polyamids angehoben wird. Dies soll zu verbesserten Eigenschaften und verbesserter Oberfläche des Pultrusionsprofils führen.

Dieser Vorteil ist höchstens dann relevant, wenn nicht in einem Nachbehandlungsschritt die Temperatur sowieso über den Matrixschmelzpunkt angehoben wird. Der Verfahrensbeschrieb ist ausschliesslich auf Polycaprolaktam abgestimmt.

EP 0 134 992 A1 beschreibt ein Verfahren zur Herstellung von Verbundwerkstoffen, das aufgrund der vorgeschriebenen Verfahrensparameter, insbesondere der Temperaturführung, nur mit Laktam 6 Anwendung finden kann.

EP 0 408 957 A2 beschreibt Laktamschmelzen, deren Viskosität durch Beigabe von speziellen Copolyamiden gezielt erhöht ist, um Sedimentationseffekte spezifischer schwererer Zusatzstoffe, insbesondere von Glasfasern, zu verzögern. Solche Schmelzen werden bevorzugt zur Herstellung von Gebrauchsgegenständen nach dem Monomergußverfahren verwendet.

Gemäß JP-A-06 080 790 werden Verbundwerkstoffe beschrieben, welche aus Verstärkungsfasern und anionisch polymerisiertem Lactam 6 bestehen. Gemäß JP-A-06 080 790 wird mit einem anionischen Katalysator gearbeitet, z. B. Natriumlaktamat. Das ω-Caprolaktam, z. B. ∈-Caprolaktam, wird mit Initiator, Katalysator und den Fasern zusammen als Pulvergemisch in eine Form gebracht und auf eine Temperatur über dem Schmelzpunkt des Pulvers und unter dem Schmelzpunkt des Polyamids erhitzt.

Pultrudierte Profile, Teile und Platten gemäss diesem beschriebenen Stand der Technik, haben bisher kaum Eingang in Praxisanwendungen gefunden.

Dies dürfte auf ungenügende Eignung der beschriebenen Matrixmaterialien zurückzuführen sein, wie Restmonomergehalt, hohe Wasseraufnahme, Schwund etc.

Polycaprolaktam weist einen Schmelzpunkt von ca. 220°C auf, so dass es für einfache Anwendungen, wo z.B. Dimensionsstabilität und Schwund eine untergeordnete Rolle spielen, in Frage kommt.

Leider verbleibt bei der anionischen Polymerisation von Caprolaktam ein hoher Restmonomergehalt, insbesondere wenn man oberhalb des Polymerschmelzpunktesarbeitet. Auch führt die Polymerisationsreaktion zu starkem Schwund. Zudem besitzt Polyamid 6 eine hohe Wasseraufnahme in feuchter Umgebung, was zu Dimensionsänderungen, inneren Spannungen, Delamination und zu starken Änderungen der Matrixeigenschaften führen kann.

Für eine Vielzahl von Anwendungen werden Verbundwerkstoffe mit niedrigem spezifischem Gewicht, bestehend aus verstärkenden Filamenten und einer Matrix, welche die Fasern vollständig benetzt und umhüllt und die
■ bei Feuchteänderungen in ihren Eigenschaften konstant und dimensionsstabil bleiben,
■ geringe Extraktgehalte (Restmonomer, Oligomer) aufweisen, da zu hohe Restmonomeranteile die Faserhaftung sowie das toxikologische bzw. ökologische Umfeld negativ beeinflussen,
■ eine hohe Beständigkeit gegen wässerige Systeme, Fette, Öle und Treibstoffe sowie Alkohole besitzen,
■ Umwelteinflüssen, insbesondere der natürlichen Bewitterung hervorragend widerstehen,
■ und hinreichende thermische Eigenschaften für eine Vielzahl von Anwendungen besitzen,
benötigt.

Es ist daher Aufgabe der Erfindung, thermoplastisch verformbare Verbundwerkstoffe aus Verstärkungsfasern in einer Polyamid 12-Matrix bereitzustellen, die die vorgenannten Anforderungen erfüllen und die Nachteile des Standes der Technik vermeiden. Ebenfalls ist ein neues Verfahren bereitzustellen, das die Herstellung dieser Verbundwerkstoffe sowie der zugehörigen Formkörper ermöglicht.

Diese Aufgabe wird durch die dimensionsstabilen, schwundarmen, thermoplastisch verformbaren Verbundwerkstoffe gemäß Anspruch 1 oder 2, und durch das Verfahren nach Anspruch 6 oder 7 gelöst. In Anspruch 14 sind Anwendungen der erfindungsgemäßen Produkte beschrieben.

In den Unteransprüchen sind bevorzugte Ausführungsformen der Erfindung enthalten.

Erstaunlicherweise hat sich nun gezeigt, dass Verbundwerkstoffe aus Filamentanordnungen der geschilderten Art und Polyamid 12 als Matrix diese Anforderungen in hohem Masse erfüllen, wenn die Matrix aus anionisch polymerisiertem Laktam 12 besteht, und die Faserimprägnation im Präpolymerstadium erfolgt, solange die Schmelze dünnflüssig ist und eine hohe Fliess- und Benetzungsfähigkeit besitzt.

Gegenstand der Erfindung sind daher Gebrauchsgegenstände aus orientierten Faseranordnungen, insbesondere aus Endlosfasern (Filamente) und einer Matrix, die überwiegend aus Polyamid 12 besteht, das nach dem Verfahren der anionischen Polymerisation hergestellt ist.

Dabei können die Gebrauchsgegenstände z.B. pultrudierte Profile, flächige Pressteile oder in einem Resin-Transfer-Moulding bzw. einem Rotomouldingähnlichen Verfahren hergestellte Formkörper sein.

Als Filamente eignen sich Glasfasern, z.B. E-Glasfasern, Mineralfasern, Keramikfasern, Kohlefasern, Fasern aus aromatischem Polyamid z.B. auf Basis p-Phenylendiamin und Isophtalsäure und/oder Terephtalsäure oder auch Fasern auf Basis nachwachsender Rohstoffe, wie z.B. Hanf oder Flachs.

Der Volumenanteil der Fasern beträgt vorzugsweise 25 - 60 Vol.-% und liegt insbesondere im Bereich von 45 - 55 Vol.-%.

Die Strukturgebung der Fasern erfolgt je nach vorgegebener Anwendung über ein Parallellege-, Web-, Strick-, Flecht-, Wickel- oder auch ein Stickverfahren oder je nach räumlicher Lage im Fertigteil über eine Kombination dieser Verfahren.

Diese Verfahren sind im Stand der Technik wohlbekannt und benötigen keiner weiteren Erörterung.

Neu und erfindungsgemäss ist, dass die Matrix, die vorwiegend aus Polylaurinlaktam besteht, die Fasern bis ins Innere der Faserbündel vollständig benetzt, was zu Produkten mit im Vergleich zum Stand der Technik verbesserten Eigenschaften führt.

Erreicht wird dies dadurch, dass die Matrix nach dem Verfahren der anionischen Polymerisation hergestellt wird und die Fasergebilde in der niederviskosen Vorstufe der Polymerisation benetzt werden. Dazu kann z.B. je eine wasserfreie, katalysatorhaltige Laktam-12 Schmelze und eine wasserfreie, aktivatorhaltige Laktam-12 Schmelze unter intensivem Durchmischen zusammenführt und die so aktivierte Mischung sofort im noch dünnflüssigen (niedermolekularen) Zustand zur Tränkung und Benetzung der vorbereiteten Endlosfasergebilde verwendet wird.

Man kann aber auch von wasserfreien Pulvermischungen aus Laktam-12, Katalysator und Cokatalysator ausgehen und diese in Anwesenheit der Fasergebilde, unter Druck- und Hitzeeinwirkung aufschmelzen, wobei Durchdringung der Fasergebilde mit Schmelze erfolgt.

Anschliessend erfolgt unter Wärmeeinwirkung Auspolymerisation der aktivierten Laktam-12 Schmelze, die im allgemeinen mit Formgebungsprozessen kombiniert ist.

Vorteilhafterweise erfolgen solche Prozesse, wie dem Fachmann bekannt ist, unter trockener Inertgasatmoshäre.

Die Formgebung erfolgt dabei z.B. im Pultrusionsprozess durch ein, die Endform bestimmendes Werkzeug, oder durch kontinuierliches Heisskalandrieren der imprägnierten, flächigen Fasergebilde wie Gewebe, Matten, Gelege, Gestricke und "Non-wovens" oder mit Hilfe der bekannten Verfahren der Pre-Preg-Technik, wobei die Verfahren auch Entgasungsschritte beinhalten können.

Ein weiteres Verfahren basiert auf der Resin-Transfer-Moulding-(RTM)-Technik. Dabei wird dünnflüssige (niedermolekulare), aktivierte Laktam 12-Schmelze zu einem sich in einer heissen Form befindendes, speziell strukturiertes Verstärkungsfasergebilde so zugefügt, dass Umhüllung der vorbereiteten Filamente mit der Schmelze erfolgt, und die Schmelze anschliessend unter Temperatur- und Druckeinwirkung auspolymerisiert und das Fertigteil nach Abkühlung aus der Form entnommen wird.

Dabei ist die **Pultrusion** ein bekanntes Verfahren zur Herstellung endlosfaserverstärkter Bauteile, die heute fast ausschliesslich durch Imprägnation und Härtung von duroplastischen Kunststoffen gefertigt werden.
Der Prozess ist z.B. in ASM Handbook Volume 1, Composites S. 533 - 543 (1987) beschrieben.

**Resin Transfer Moulding (RTM)** ist ein häufig verwendeter Prozess z.B. zur Herstellung glasfaserverstärker Carrosserie Teile in der Automobilindustrie. Es werden vorwiegend duroplastische Kunststoffe wie ungesättigte Polyester oder Epoxyharze verwendet. Ein ähnlicher Prozess ist das sogenannte Structural Resin Injection Moulding (S-RIM). Dieser Prozess verwendet als Matrix Polyurethan Reaktivsysteme. Davon existiert ein abgewandelter Prozess für Polyamide auf Basis Caprolactam, der sogenannte Nyrim Prozess. NyRIM benutzt als Hauptkomponente Caprolactam.

Der RTM Prozess ist im ASM-Handbook Volume 1, Composites p. 564 - 568 (1987) beschrieben. Der RIM und NyRIM-Prozess sind in der Enz. of Polymer Sciene & Eng. II Edition 1988 S. 72 - 100 (1988) beschrieben.

**Die Pre-Preg-Technik** wird heute zur Herstellung von vorimprägnierten Halbzeugen, den sogenannten Pre-Pregs, aus Fasergeweben, - matten, -gelegen und -gestricken mit duro- und thermoplastischer Matrix-Vorstufe verwendet.

Halbzeuge (Pre-Pregs) werden gemäß den in der Technik wohlbekannten Verfahren zu einem faserverstärkten Fertigteil verarbeitet.

Die Herstellung von Pre-Pregs ist bekannt. Eine Vielzahl von Produkten ist im Markt erhältlich. Das Verarbeiten der Pre-Pregs ist für Thermoplaste im ASM Handbook Volume 1, Composites S. 544 - 553 und für Duroplaste z.B. in ASMHandbook Volume 1, Composites S. 559 - 663 beschrieben.

Für die Herstellung von faserverstärkten Hohlkörpern kann auch nach einem abgewandelten Rotationsguß-Verfahren so gearbeitet werden, daß die Faseranordnung, z.B. ein Fasergestrick oder ein Gewirk oder Gestick, Gewebe oder Kombinationen zuerst in die geöffnete Form eingelegt werden muß. Während des bewegten Prozeßablaufs durchdringt dann die dünnflüssige, aktivierte Schmelze durch den Bewegungsablauf die Faseranordnung, polymerisiert und geht dann beim Abkühlen in den festen Matrixzustand über.

Es bieten sich verschiedene Möglichkeiten zur Durchführung des erfindungsgemäßen Verfahrens an.

Bei kleinen Stückzahlen können direkt trockene Pulvermischungen aus Laktam 12, Katalysator wie z.B. Natriumlaktamat und Cokatalysator wie z.B. Acyllaktam hergestellt werden, mit den Filamentgebilden in Kontakt gebracht und unter Druck- und Temperatureinwirkung aufgeschmolzen werden. Dadurch werden dann die Filamentgebilde benetzt und durchdrungen. Wesentlich sind Ausschluss von Feuchte und Arbeiten unter Schutzgas.

Speziell vorteilhaft ist ein sogenanntes Zweitopfverfahren, bei dem je volumengleiche Anteile an katalysatorhaltiger und aktivatorhaltiger Laktam-12-Schmelze kurz vor der Imprägnation intensiv vermischt werden, wonach die rasche Polymerisation, durchlaufend einen dünnflüssigen, benetzungsaktiven Zustand, einsetzt.

Alternativ kann z.B. auch ein flüssiger, in geeignetem Masse vorverdünnter Cokatalysator der katalysatorhaltigen Laktam 12-Schmelze zugefügt werden ("Eintopfverfahren"), wonach ein intensives Durchmischen, z.B. über einen Statikmischer, zu erfolgen hat. Als Mischeinheit kann auch ein dichtkämmender Extruder, bzw. Kneter Anwendung finden.

Dabei kann die Schmelze Eigenschafts-relevante Zusätze mitenthalten, sofern diese den Polymerisationsablauf nicht wesentlich beeinträchtigen. In Frage kommen dabei Stabilisatoren gegen Hitze-, Licht- oder hydrolytischen Abbau, flammschützende oder die Zähigkeit erhöhende Mittel. Weiterhin kommen als Zusätze Verarbeitungshilfsmittel, Füllstoffe, Pigmente oder Kombinationen der vorgenannten Zusätze in Betracht. Diese Zusätze sind in Art und Konzentration so ausgewählt, daß sie die anionische Polymerisation nicht beeinträchtigen. Unter herstellungsbedingten Zusätzen wird hier ein die Polymerisation nicht beeinträchtigendes Medium, insbesondere ein Gleit- und Entformungsmittel oder ein inertes Mineralöl, das im Verbundwerkstoff mit enthalten sein kann, verstanden.

Zur Zähigkeitserhöhung kann auch ein spezielles, z.B. Polyäthergruppen enthaltendes Aktivatorsystem verwendet werden.

Als Filamente und/oder Fasern eignen sich Glasfasern, insbesondere aus E-/ R-/ S- und ECR-Glas, Kohlefasern sowohl der Hochfest- als auch der Hochmodultypen, Naturfasern auf Cellulosebasis, sofern sie gut vorgetrocknet sind und den Polymerisationsablauf nicht beeinträchtigen wie Flachs, Hanf, Ramie oder auch regenerierte Cellulose, Mineralfasern, Keramikfasern oder auch synthetische Fasern z.B. aus aromatischem Polyamid der unter den Markennahmen Nomex® und Kevlar® bekannten Typen sowie Hochmodul-Polyvinylalkoholfasern.

Als Flächengebilde eignen sich z.B. in spezieller Anordung gelegte Filamentkabel, Filamentgewebe der verschiedensten Art, Gewirke, Gestricke und gestickte Strukturen und insbesondere auch Kombinationen solcher Anordungen wie sie z.B. der Pultrusionsprozess ermöglicht. Dabei können auch die verschiedensten Filamenttypen miteinander kombiniert sein.

Beispielsweise kann der innere Bereich einer Faserstruktur ein Gewirke sein und die Randzonen ein Gewebe oder Anordnungen aus Faserkabeln. Damit kann in einem thermischen Nachverformungsschritt der innere Teil dreidimensional nachverformt werden, während der äussere Bereich seine Form beibehält und z.B. im Fertigteil die strukturelle Festigkeit ergibt.

Die Möglichkeit der thermischen Nachverformung ist eine vorteilhafte Spezialeigenschaft der erfindungsgemässen Verbundwerkstoffe, wobei die Polylaurinlaktammatrix ein breites Nachverformungsfenster, das den Temperaturbereich von ca. 200 - 300°C umfasst, besitzt.

Diese Verbundwerkstoffe lassen sich im Rahmen der Faserkonstruktion bzw. - geometrie sowohl nach-, als auch umformen.

Ausser der Möglichkeit zur thermischen Nachverformung besteht auch die Möglichkeit, Konstruktionsteile thermisch miteinander zu verschweissen.

Dabei kann z.B. ein Verbundwerkstoff der erfindungsgemässen Art mit einem kurzglasfaserhaltigen und im Spritzgussverfahren hergestellten Teil thermisch verschweisst werden. Damit können z.B. flächenförminge Verbundwerkstoffteile der erfindungsgemässen Art mit Elementen fest verbunden werden, die ein späteres Zusammenfügen über die bekannten Methoden der Verbindungstechnik wie Spiegelschweissen, Vibrationsschweissen, Reibungsschweissen ermöglichen.

Die Imprägnation der Filamentanordnungen, z.B. flächiger Pre-Pegs, muss durch frisch aktivierte bzw. intensiv gemischte und noch dünnflüssige Laktam-12 Schmelze erfolgen.

Zur Herstellung der aktivierten Laktam 12-Schmelze kann man unter intensivem Mischen Katalysator und Aktivator in verfahrensrelevanten Konzentrationen in die Laktam 12-Schmelze einbringen, wobei sowohl Katalysator als auch Aktivator in geeignetem Maße vorverdünnt sein können und man zur Verdünnung geschmolzenes Laktam 12 oder weitere herstellungsbedingte Zusätze, wie insbesondere ein flüssiges, die Polymerisation nicht beeinträchtigendes Medium, bevorzugt ein Mineralöl oder ein Gleit- und ein Entformungsmittel verwendet werden können.

Es ist aber auch möglich, daß man den Katalysator in die aktivierte Laktam 12-Schmelze in fester Form, als Lösung oder als Suspension unter raschem und intensivem Durchmischen der Schmelze einbringt.

Bei der Verfahrensdurchführung werden Vakuum, Druck und Temperatur so angewendet, dass die Filamentgebilde vollständig von Schmelze und späterer Matrix umhüllt werden. Gegebenenfalls muss dazu ein geschlossener Volumenbereich, z.B. entsprechend der Endform des Fertigteils, ausgebildet werden, der vor der Schmelzezugabe evakuiert wird, um Gaseinschlüsse zu vermeiden.

Zur Herstellung einfacher, flächiger Pre-Pregs kann die Matrix auch in Form eines Pulvergemisches aus Laktam-12 und Katalysator sowie Cokatalysator eingebracht werden. Vorteilhafterweise wird dabei das Pulvergemisch unter Inertgas hergestellt und vor Feuchtezutritt geschützt. Die Filamentgebilde werden mit dem Pulvergemisch trocken imprägniert und der Einwirkung von Druck und Temperatur ausgesetzt, wobei beim raschen Überschreiten des Laktam-12 Schmelzpunktes auch die Polymerisation einsetzt. Zur Vermeidung von Gaseinschlüssen kann vor Anwendung von Druck und Temperatur evakuiert werden.

Die Grundlagen des Reaktionsverlaufs der alkalischen und der aktivierten Lactampolymerisation sind in der Literatur vielfach beschrieben so z.B. im Kunststoff-Handbuch Band VI, Polyamide; C. Hanser Verlag (1966) in den Kapiteln: "Die alkalische Lactampolymerisation" sowie die "Aktivierte, alkalische Polymerisation". Katalysatorsysteme leiten sich insbesondere ab von starken Basen wie z.B. Natriumhydrid, die den aktiven Wasserstoff des Laktams eliminieren und zu Laktamat, etwa Natriumlaktamat führen.

Cokatalysatoren sind in einer Vielzahl bekannt. Beispiele sind Acylverbindungen, insbesondere des Laktams oder auch Isocyanate wie z.B. das Caprolaktamverkappte Isocyanat der Fa. EMS-Chemie vom Typ IL-6 oder auch N-Acetylcaprolactam oder auch aromatische Carbodiimide oder auch Mischungen dieser Verbindungen.

Vorteilhafterweise sind die Rezepturen so abgestimmt, dass nach Aktivierung des Systems genügend Zeit für die völlige Durchdringung der Filamentgebilde durch die Schmelze verbleibt, bevor die Viskosität der Schmelze ansteigt .

Das erfindungsgemäße Verfahren unterscheidet sich wesentlich vom Stand der Technik, das zu Pre-Pregs mit Polycaprolaktam als Matrix führt. Da der Schmelzpunkt von Laktam 12 (ca. 153°C) nahe beim Schmelzpunkt von Polylaurinlaktam liegt (ca. 175°C), arbeitet man erfindungsgemäß in einem Temperaturbereich, in dem die flüssige Laktamschmelze direkt in flüssige Polymerschmelze übergeht. Dies ist besonders vorteilhaft für die gute Benetzung der Filamentgebilde und möglich, weil das Polylaurinlaktam bei dieser Verfahrensweise einen tiefen Restmonomergehalt von 1-4 Gew-%, bezogen auf die Matrix, besitzt, während er bei nach dem Stand der Technik (z.B. EP-A-0 544 049) hergestelltem Polycaprolaktam erfahrungsgemäss bei 8-12 Gew-% liegt.

Im weiteren zeigt die anionische Polymerisation von Laurinlaktam praktisch keinen Reaktionsschwund, der hingegen bei der anionischen Polymerisation von Caprolaktam 10 - 12 Vol.-% beträgt. Dies führt zu Problemen z.B. bei der Herstellung von dickwandigen, pultrudierten Teilen und führt ganz allgemein zur Bildung von Lunkern, Blasen und zu inneren Spannungen.

Die erfindungsgemässen Verbundwerkstoffteile, hergestellt über Imprägnation mit einer aktivierten Laktam-12 Schmelze und einer Temperatur, die zum Zeitpunkt der Polymerisation über dem Polymerschmelzpunkt liegt, zeichnen sich durch folgende hervorragenden Eigenschaften aus:
- sie besitzen einen guten Matrix/Faserverbund;
- sie besitzen gute mechanische Eigenschaften und gute Abriebwerte;
- sie sind dimensionsstabil;
- sie sind im Dauergebrauch bei Einwirkung von Hitze, Hydrolyse und Bewitterung stabil, deutlich stabiler als Produkte, die auf Laktam 6 basieren;
- sie können thermisch nach- oder umgeformt werden und lassen sich über den Schmelzezustand mit anderen Komponenten, die z.B. Nylon 12 oder Nylon 11 als Matrix haben, thermisch verschweissen, wobei sich das breite Verarbeitungsfenster von Polyamid 12 vorteilhaft auswirkt.

Die erfindungsgemäss hergestellten faserarmierten PA 12-Produkte finden ein breites Anwendungsfeld.

Folgende Anwendungen seien beispielhaft erwähnt:

Pultrusionsprofile eignen sich z.B. als Schutzkanäle für die verschiedensten Leitungselemente, z.B. als Kabelschutzkanäle in der Elektroindustrie oder als Schutzelemente für Flüssigkeitsleitungen oder auch als Teile von Stützelementen bei tragenden Leichtbaukonstruktionen etwa bei Bedachungen oder bei Brücken.

Auch in der Fahrzeugindustrie eröffnen sich vielfältige Anwendungsmöglichkeiten für erfindungsgemäße Verbundwerkstoffe, z.B. als lasttragende Rahmenkonstruktionen, als Abdeckelemente oder auch als Deckplatten bei sogenannten Sandwichelementen z.B. mit wabenförmigem oder geschäumtem Kern. Anwendungen für solche Elemente und Konstruktionen ergeben sich bei Strassen- und Schienenfahrzeugen, aber auch in der Luft- und Raumfahrt.

Weitere Anwendungen sind z.B. im Meer treibende Käfigkonstruktionen für die Fischzucht, dimensionsstabile und lasttragende Konstruktionen für Antennen, Parabolspiegel und Übermittlungssysteme, Leichtbaubedachungenjeder Art ganz allgemein Anwendungen aus Profilen unter Verwendung der "Space-Frame Technik".

Auch bei Sportgeräten ergeben sich vielfältige Einsatzmöglichkeiten z.B. Bootsmasten, Rahmen und Griffe von Tennisschlägern, Golfschlägern, Hockeyschläger, Pfeile und Bogen im Schiesssport, sowie Skis, Schlitten und Surfbretter im Wintersport, Fahrradteile.

Beispielhafte Anwendungsmöglichkeiten sind ferner hohen Beschleunigungskräften unterworfene Maschinenelemente z.B. in der Textilindustrie etwa in der Webetechnik oder Antriebselemente z.B. Antriebsschrauben von Booten.

Dabei besitzen kohlefaserverstärkte Polylaurinlactambauteile eine niedere Gleitreibung und niederen Abrieb, was sie speziell für bewegte Maschinenteile interessant macht.

Wegen der guten Witterungsstabilität und Seewasserfestigkeit ergeben Verbundwerkstoffplatten auf Polylaurinlactambasis auch geeignete Bauteile im Schiff- und Bootsbau für Teile der Aussenhaut. Eignung für Verkleidungselemente ist ferner beim Bau von Karosserieteilen für Autos und Verkleidungsteilen von Schienenfahrzeugen gegeben, wobei neben den guten Festigkeitseigenschaften jeweils die mögliche Gewichtsreduktion wesentlich ist.

Wesentliche Anwendungen ergeben sich ferner bei Leitungen, insbesondere bei Rohren für Gase, Treibstoffe, Öle und Fette sowie Süss- und Meerwasser, wobei die ausgezeichnete Beständigkeit der verstärkten Polylaurinlaktammatrix z.B. gegen Schlagbeanspruchung, Termiten, Umwelteinflüsse, Chemikalien und Meerwasser eine Rolle spielt.

Solche Rohre können auch als Schutzrohre z.B. in der Elektro- und Elektronikindustrie, z.B. für Elektrokabel verwendet werden.

Dies sind nur einige Beispiele für die vielfältigen Anwendungen und beschränken die Erfindung nicht.

Die Erfindung wird nun in Form der nachfolgenden neun Beispiele näher erläutert.

### Beispiele

Für die Beispiele wurden Prüfkörper aus Köper-Glasgewebe 92140, 390 g/m² (der Firma Composite Shop, Jegensdorf CH), mit Silan-Finish verwendet. Als Monomere wurden Laurinlactam ex. Ems und Caprolactam Monomergussqualität ex DSM verwendet. Als Katalysator wurde Natriumhydrid (55% in Öl) der Firma Fluka AG, Buchs (CH) verwendet. Als Cokatalysator fanden Cokatalysator S und Cokatalysator A der Firma Pacast AG, Sargans (CH) Verwendung. Cokatalysator S ist ein Isocyanat verkappt mit Caprolactam. Cokatalysator A ein Carbodiimid verkappt mit Caprolactam.

### Mischungen

Alle Mischungen wurden unter Inertgas vorbereitet. Zuerst wurde das Monomer geschmolzen und mit der nötigen Menge Natriumhydrid versetzt. Die katalysatorhaltige Lösung wurde dann abgekühlt, um die festgewordene Masse zu feinem Pulver zu zerkleinern. Zu diesem Pulver wurde anschliessend die nötige Menge Cokatalysator gegeben, der damit innig vermischt wurde.

Folgende Mischungen wurden hergestellt:

| Materialien | Mischung [Gew.-%] | | | | | |
|---|---|---|---|---|---|---|
| | 1 | 2 | 3 | 4 | 5 | 6 |
| Laurinlactam | 100,0 | 100,0 | 90,0 | | 10,0 | |
| Caprolactam | | | 10,0 | 100,0 | 90,0 | 100,0 |
| NaH (55% in Öl) | 0,2 | 0,3 | 0,2 | 0,3 | 0,3 | 0,3 |
| Cokatalysator S | 2,5 | | 2,5 | 3,0 | 3,0 | |
| Cokatalysator A | | 4,2 | | | | 4,2 |

### Herstellen der Prüfplatten

Die Glasgewebe wurden zugeschnitten und bei 70°C im Vakuumofen vorgetrocknet. Anschliessend wurden unter Inertgas die Glasgewebe mit der für 40% Faservolumengehalt benötigten Menge Pulvermischung bestreut und übereinander geschichtet. Das fertige Gelege wurde dann kalt gepresst und in temperaturbeständige Folie eingeschweisst. Im anschliessenden Pressvorgang wurden folgende Bedingungen gewählt:
- Pressdruck :: 5 bar
- Temperaturprofil:: Laurinlactam : 150 → 220°C in 20 min. dann 10 min. isotherm
Caprolactam : 130 → 230°C in 25 min dann 10 min. isotherm

Mit Abstandhaltern wurde gewährleistet, dass ein relativ genauer Faservolumengehalt von ca. 45 - 50% erreicht werden konnte. Bei 6 Lagen Glasgewebe wurde eine Plattendicke von 2 mm angestrebt.

Nachdem die Maximaltemperatur erreicht war, wurde in einer kalten Presse abgekühlt und anschliessend entformt.

### Resultate der Beispiele I-V

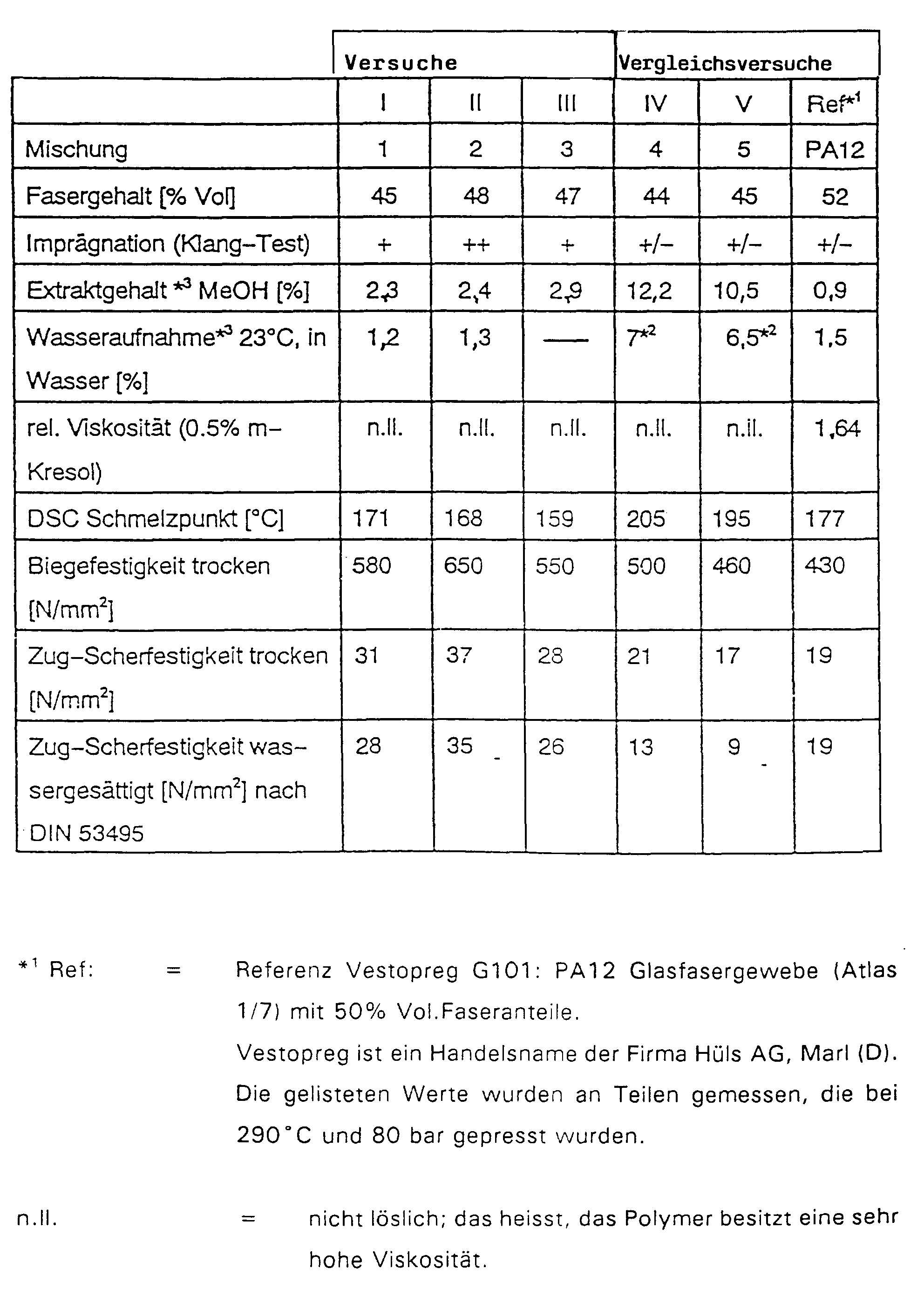

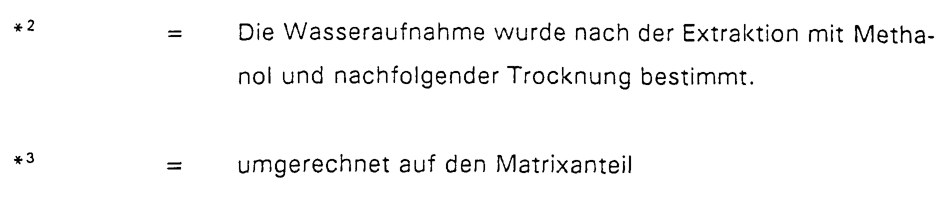

### Beurteilung der Proben I-V

Die besten Composite-Eigenschaften ergeben sich mit dem erfindungsgemässen Prüfteil II. Es zeigt sich, dass hier der Einfluss des Cokatalysators eine Rolle spielt, d.h. bei einem langsameren Cokatalysator wie dem Cokalysator A verlängert sich die verfügbare Zeit für die Imprägnation und somit ergibt sich eine bessere Durchtränkung. Als Resultat zeigen sich hohe Werte für die Biegefestigkeit und die Zug-Scherfestigkeit. Schlechter schneiden sowohl die Referenz aus einem komerziell erhältlichen Polyamid 12-Verbundwerkstoff und aber auch Prüfteile aus anionisch polymerisiertem Caprolactam ab. Dies ist vor allem erstaunlich, da zumindest im Vergleich von Probe I und IV vergleichbare Rezepturen verwendet wurden und die Pressbedingungen eigentlich vorteilhafter für die Caprolactam-Polymerisation waren, d.h. die Starttemperatur betrug 130°C anstatt 150°C wie bei Laurinlactam.

Sehr schlecht schnitten die aus anionisch polymerisiertem Caprolaktam hergestellten Teile in der Zugscherfestigkeit nach der Wasserlagerung ab. Es ist anzunehmen, dass die Restmonomeranteile zum Teil das Interface Faser/Matrix stören bzw. schwächen. Bei mit Laurinlaktam anionisch polymerisierten Teilen tritt dieser Effekt nicht auf.

Zur Überprüfung der Resultate wurden neue Prüfteile nach demselben Pressverfahren aber mit vergleichbaren Rezepturen hergestellt und auf Ihre Eigenschaften hin untersucht.

### Resultate der Beispiele VI, VII

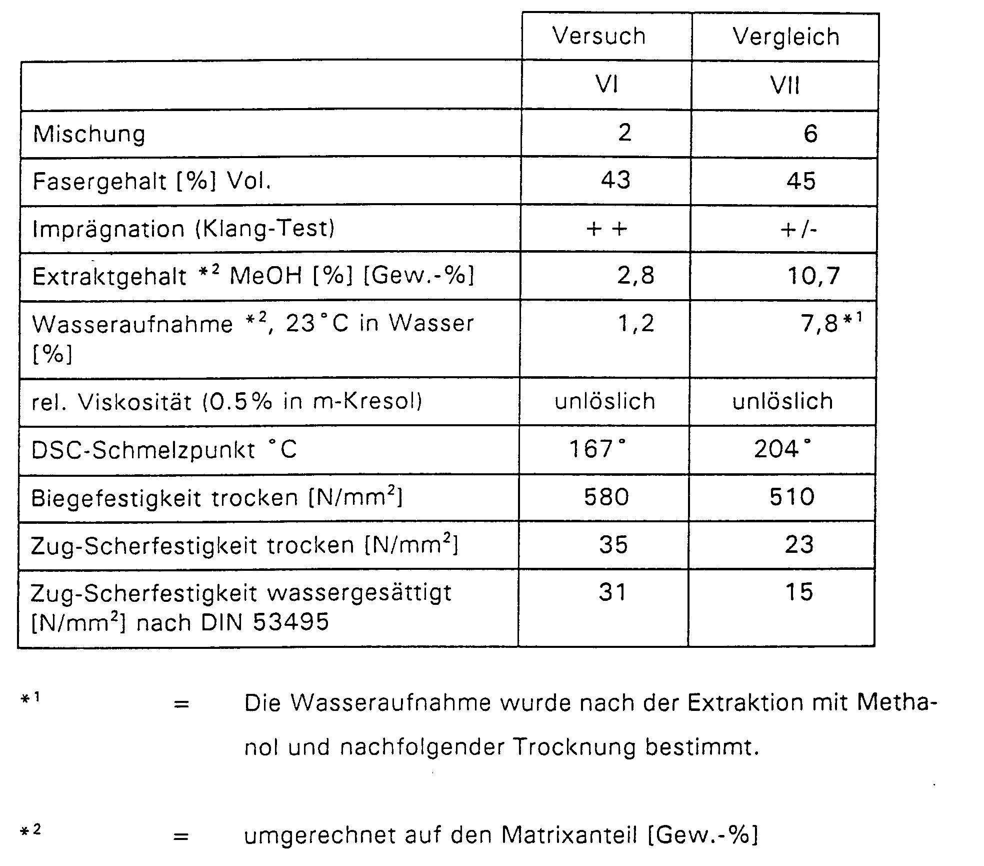

### Beurteilung der Proben VI + VII

Die Resultate der ersten Prüfserie haben sich bestätigt. Die Probe VII hergestellt aus anionisch polymerisiertem Caprolaktam zeigt hohen Restmonomergehalt was zu geringerer Haftung am Interface Faser/Harz führt. Als Resultat werden daher deutlich tiefere Biegefestigkeit und Zugscherfestigkeit erhalten. Auch der subjektive "Glasklang" ist trotz optisch gleich guter Imprägnation viel schlechter als bei anionisch polymerisierten Teilen auf Basis Laurinlaktam.

Im weiteren wurden auch Pressteile aus Kohlefaser-Atlasgewebe (285 g/m²) hergestellt, das vorgängig entschlichtet wurde. Mit derselben Herstellungsmethode, wie für das Glasgewebe beschrieben, wurden folgende Grundeigenschaften bestimmt:

### Resultat der Proben VIII, IX

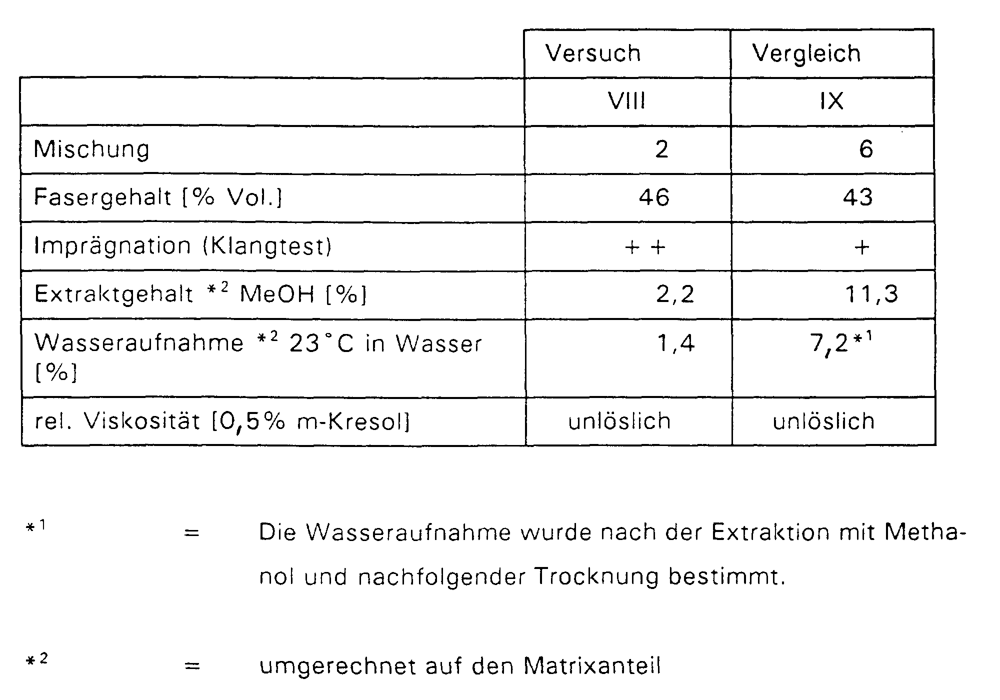

Wie beim Glasfasergewebe zeigte sich auch beim Kohlefasergewebe, dass das mit Laurinlaktam polymerisierte Teil (Probe VIII) eine bessere Imprägnation aufweist.

### Test-Methoden

- 3 Punkt Biegeprüfung nach DIN EN63
   Prüf-Geschwindigkeit 2 mm/min
   - Probegrösse :: Länge = 20 x Dicke, Breite = 15 mm
   Dicke = 2 - 3 mm
- Zug-Scherfestigkeit in Anlehnung an ASTM D-3846
   - Prüfgeschwindigkeit :: 5 mm/min
   - Führungsvorrichtung :: keine
   - Kerbe :: U-Kerbe im Abstand von 10 mm
   - Probegrösse :: Länge = 80mm, Breite = 15 mm
   Dicke = 2 - 3 mm
- Fasergehaltsbestimmung mittels Glührückstand
- Extraktgehalt : Extraktion mit Methanol am Rückfluss, 8 Std. Wert bezogen auf Matrixanteil
- Wasseraufnahme: nach DIN 53495 23°C / gesättigt bezogen auf Matrixanteil
- rel. Viskosität : 0.5% m-Kresol
- DSC-Schmelzpunkt wurde nach ISO 3146-C bestimmt: Aufheizrate 20°C/min.
- Imprägnation/Klangtest : subjektive Bestimmung mittels Metallstab. Gibt qualitativen Aufschluss über Faser/Harzbenetzung und damit zur Imprägnation.

## Patentansprüche

1. Dimensionsstabile, schwundarme, thermoplastisch verformbare Verbundwerkstoffe aus Verstärkungsfasern in einer Polyamid 12-Matrix, die aus anionisch polymerisiertem Laurinlaktam besteht, das bis zu 15 Gew.-% comonomeres Laktam mit 4 bis 9 C-Atomen und gegebenenfalls übliche Zusätze enthält, **dadurch gekennzeichnet, daß** die Verbundwerkstoffe dadurch erhältlich sind, daß
(a) man eine aktivierte, anionische Laktam 12-Schmelze herstellt,
(b) diese im dünnflüssigen Zustand die Faseranordnung durchdringt bzw. imprägniert und die Polymerisation einsetzt, so daß sie die Matrix für einen Verbundwerkstoff oder ein Verbundformteil bildet, wobei in einem Temperaturbereich gearbeitet wird, in dem die flüssige Laktamschmelze direkt in die flüssige Polymerschmelze übergeht,
(c) man die aktivierte Schmelze unter Temperatur- und gegebenenfalls Druckeinwirkung auspolymerisiert,
(d) man gegebenenfalls das vorgeformte Teil einem Nachformungsschritt unter Druck- und Temperatureinwirkung unterwirft.

2. Dimensionsstabile, schwundarme, thermoplastisch verformbare Verbundwerkstoffe aus Verstärkungsfasern in einer Polyamid 12-Matrix, die aus anionisch polymerisiertem Laurinlaktam besteht, das bis zu 15 Gew.-% comonomeres Laktam mit 4 bis 9 C-Atomen und gegebenenfalls übliche Zusätze enthält, **dadurch gekennzeichnet, daß** die Verbundwerkstoffe dadurch erhältlich sind, daß
(a) man eine feinteilige Pulvermischung aus Laktam 12, die Aktivator und Katalysator in verfahrensrelevanten Konzentrationen enthält, in fester Form mit der Faseranordnung in innigen Kontakt bringt, die Pulvermischung unter Druck- und Temperatureinwirkung aufschmilzt, wobei sie zur anionisch aktivierten Laktam 12-Schmelze wird,
(b) diese im dünnflüssigen Zustand die Faseranordnung durchdringt und die Polymerisation einsetzt, so daß sie die Matrix für einen Formkörper bildet, wobei in einem Temperaturbereich gearbeitet wird, in dem die flüssige Laktamschmelze direkt in die flüssige Polymerschmelze übergeht,
(c) man unter Temperatur- und gegebenenfalls Druckeinwirkung auspolymerisiert,
(d) man gegebenenfalls das vorgeformte Teil einem Nachformungsschritt unter Druck- und Temperatureinwirkung unterwirft.

3. Verbundwerkstoffe nach Anspruch 1 oder 2, **dadurch gekennzeichnet, daß** die Fasern Endlosfasern sind.

4. Verbundwerkstoffe nach einem der voranstehenden Ansprüche 1 bis 3, **dadurch gekennzeichnet, daß** sie 25 bis 60 Vol.-% Verstärkungsfasern enthalten.

5. Verbundwerkstoffe nach einem der voranstehenden Ansprüche 1 bis 4, **dadurch gekennzeichnet, daß** sie 45 bis 55 Vol.-% Verstärkungsfasern enthalten.

6. Verfahren zur Herstellung von Verbundwerkstoffen nach einem der Ansprüche 1 bis 5, **dadurch gekennzeichnet, daß**
(a) man eine aktivierte, anionische Laktam 12-Schmelze herstellt,
(b) diese im dünnflüssigen Zustand die Faseranordnung durchdringt bzw. imprägniert und die Polymerisation einsetzt, so daß sie die Matrix für einen Verbundwerkstoff oder ein Verbundformteil bildet, wobei in einem Temperaturbereich gearbeitet wird, in dem die flüssige Laktamschmelze direkt in die flüssige Polymerschmelze übergeht,
(c) man die aktivierte Schmelze unter Temperatur- und gegebenenfalls Druckeinwirkung auspolymerisiert,
(d) man gegebenenfalls das vorgeformte Teil einem Nachformungsschritt unter Druck- und Temperatureinwirkung unterwirft.

7. Verfahren zur Herstellung von thermoplastisch verformbaren Verbundwerkstoffen nach einem der Ansprüche 1 bis 5, **dadurch gekennzeichnet, daß**
(a) man eine feinteilige Pulvermischung aus Laktam 12, die Aktivator und Katalysator in verfahrensrelevanten Konzentrationen enthält, in fester Form mit der Faseranordnung in innigen Kontakt bringt, die Pulvermischung unter Druck- und Temperatureinwirkung aufschmilzt, wobei sie zur anionisch aktivierten Laktam 12-Schmelze wird,
(b) diese im dünnflüssigen Zustand die Faseranordnung durchdringt und die Polymerisation einsetzt, so daß sie die Matrix für einen Formkörper bildet, wobei in einem Temperaturbereich gearbeitet wird, in dem die flüssige Laktamschmelze direkt in die flüssige Polymerschmelze übergeht,
(c) man unter Temperatur- und gegebenenfalls Druckeinwirkung auspolymerisiert,
(d) man gegebenenfalls das vorgeformte Teil einem Nachformungsschritt unter Druck- und Temperatureinwirkung unterwirft.

8. Verfahren nach einem der voranstehenden Ansprüche 6 oder 7, **dadurch gekennzeichnet, daß** man die Temperatur der Schmelze oder der Mischung sofort nach Durchdringung bzw. Imprägnation des Fasergebildes erhöht, wobei die Temperatur über dem Schmelzpunkt der anionisch polymerisierten Matrix liegt und 300°C nicht überschreiten soll.

9. Verfahren nach einem der voranstehenden Ansprüche 6 bis 8, **dadurch gekennzeichnet, daß** man eine Form oder ein Werkzeug verwendet und gegebenenfalls vorgängig die Form oder das Werkzeug evakuiert.

10. Verfahren nach Anspruch 6 bis 8, **dadurch gekennzeichnet, daß** unter Schutzgas gearbeitet wird.

11. Verfahren nach Anspruch 10, **dadurch gekennzeichnet, daß** bei der Aufbereitung der Mischung oder Schmelze, bei der Imprägnation und bei der Formgebung unter trockenem Stickstoff gearbeitet wird.

12. Verfahren nach Ansprüchen 6 bis 11, **dadurch gekennzeichnet, daß** die Formgebung über einen Pultrusionsprozeß, das Resin-Transfer-Molding-Verfahren, das Rotomoldingverfahren oder die Pre-Preg-Technik erfolgt.

13. Verfahren nach einem der voranstehenden Ansprüche 6 bis 12, **dadurch gekennzeichnet, daß** man Formteile nach den Ansprüchen 1 bis 5 mit Formteilen aus Polyamid 12 bzw. mit Polyamid 12 als Matrix, und die nach dem Verfahren der anionischen Polymerisation oder hydrolytisch hergestellt sind, unter Druck- und Temperatureinwirkung thermisch verschweißt.

14. Verwendung der thermoplastisch verformbaren Verbundwerkstoffe aus Verstärkungsfasern in einer Polyamid 12 Matrix nach den Ansprüchen 1 bis 5 zur Herstellung von Schutzkanälen, Schutzelementen, Stützelementen, lasttragenden Rahmenelementen, Abdeckelementen, Käfigkonstruktionen, Konstruktionen für Übermittelungssysteme, Leichtbaubedachungen, Komponenten für die Bauindustrie, Komponenten von Sportartikeln und Maschinenelementen, die hohen Beschleunigungskräften unterworfen sind, Bauteilen im Schiffs- und Bootsbau, Karosserie- und Verkleidungsteilen im Fahrzeugbau, Rohren für den Medientransport und von Schutzrohren, speziell im Elektrobereich.

## Claims

1. Thermoplastic mouldable composite materials with dimensional stability and low shrinkage of reinforcing fibers in a matrix of polyamide 12 consisting of anionic polymerized laurinlactam comprising up to 15 % by weight co-monomeric lactam having 4 to 9 carbon atoms and if necessary usual additives **characterized in that** said composite materials are obtainable by
(a) producing a melt of activated anionic lactam 12,
(b) penetrating and impregnating, respectively, the fiber arrangement by said melting in a fluid condition and beginning the polymerization to form the matrix for a composite material or a composite moulding proceeding in a temperature range wherein said liquid melting of lactam changes readily into the liquid melting of the polymer,
(c) thorougly polymerizing said activated melting under influence of temperature and if necessary of pressure,
(d) subjecting the preformed moulding to a postmoulding step under influence of temperature and pressure if necessary.

2. Thermoplastic mouldable composite materials with dimensional stability and low shrinkage of reinforcing fibers in a matrix of polyamide 12 consisting of anionic polymerized laurinlactam comprising up to 15 % by weight co-monomeric lactam having 4 to 9 carbon atoms and if necessary usual additives **characterized in that** said composite materials are obtainable by
(a) bringing into close contact a fine powdered mixture of lactam 12 being in solid condition comprising activator and catalyst in concentrations relating to the process and said fiber arrangement, melting said powder mixture under influence of pressure and temperature, thereby obtaining said melting of anionic activated lactam 12,
(b) penetrating said fiber arrangement by said melting in a fluid condition and beginning the polymerization so that it forms the matrix for a formed piece proceeding in a temperature range wherein said liquid melting of lactam changes readily into said liquid melting of the polymer,
(c) thorougly polymerizing under influence of temperature and if necessary of pressure,
(d) subjecting said preformed moulding to a postmoulding step under influence of pressure and temperature if necessary.

3. Composite materials according to claim 1 or 2, **characterized in that** said fibers are filaments.

4. Composite materials according to any of the preceding claims 1 to 3, **characterized in that** they contain 25 to 60 % by volume of reinforcing fibers.

5. Composite materials according to any of the preceding claims 1 to 4, **characterized in that** they contain 45 to 55 % by volume of reinforcing fibers.

6. Method for producing composite materials according to any of the claims 1 to 5, **characterized by**
(a) producing a melt of activated anionic lactam 12,
(b) penetrating and impregnating, respectively, the fiber arrangement by said melt in a fluid condition and beginning the polymerization so that it forms the matrix for a composite material or a composite moulding proceeding in a temperature range wherein said liquid melting of lactam changes readily into the liquid melting of the polymer,
(c) thorougly polymerizing said activated melt under influence of temperature and if necessary of pressure,
(d) subjecting the preformed moulding to a postmoulding step under influence of pressure and temperature if necessary.

7. Method for producing thermoplastic mouldable composite materials according to any of the claims 1 to 5, **characterized by**
(a) bringing into close contact a fine powder mixture of lactam 12 being in solid condition comprising activator and catalyst in concentrations relating to the process and said fiber arrangement, melting said powder mixture under influence of temperature and pressure, thereby obtaining said melting of activated anionic lactam 12,
(b) penetrating said fiber arrangement by said melting in a fluid condition and beginning the polymerization to form the matrix for a formed piece proceeding in a temperature range wherein said liquid melting of lactam changes readily into said liquid melting of said polymer,
(c) thorougly polymerizing said activated melting under influence of temperature and if necessary of pressure,
(d) subjecting said preformed moulding to a postmoulding step under influence of pressure and temperature if necessary.

8. Method according to any of the preceding claims 6 or 7, **characterized by** increasing readily the temperature of said melting or of said mixture after penetrating and impregnating, respectively, said fiber arrangement, said temperature being over the melting point of said anionic polymerized matrix but not exceeding 300°C.

9. Method according to any of the preceding claims 6 to 8, **characterized by** using a mould or a die and if necessary evacuating the mould or die previously.

10. Method according to claim 6 to 8, **characterized by** operating under inert gas

11. Method according to claim 10, **characterized by** operating the preparation of said mixture or melting, said impregnation and said moulding process under dry nitrogen.

12. Method according to claim 6 to 11, **characterized in that** said moulding process is operated by means of a pultrusion, the process of resin-transfer-molding, the process of rotomolding or the technique of prepreg.

13. Method according to any of the preceding claims 6 to 12, **characterized in that** mouldings of the claims 1 to 5 are heat-welded under influence of temperature or pressure with mouldings of polyamide 12 and polyamide 12 as matrix, respectively, being produced according to said method of said anionic polymerisation or of hydrolysation.

14. Use of said thermoplastic mouldable composite materials of reinforcing fibers in a matrix of polyamide 12 according to the claims 1 to 5 for the production of protection channels, protective elements, supporting elements, load bearing frame elements, covering elements, cage constructions, constructions for communication systems, lightweight coverings of roofs, components for the building industry, components of sporting goods and machine elements subjected to high accelerating powers, components for naval and boat construction, body and coating parts for construction of vehicles, tubes for the transport of media and of protecting tubes, especially for the electric field.

## Revendications

1. Matériaux composites thermoplastiques thermoformables, stables dans leurs dimensions et peu contractiles, constitués de fibres de renforcement présentes dans une matrice de polyamide 12, elle-même constituée de lactames lauriques anioniques polymérisées comprenant jusqu'à 15% en poids de comonomères de lactames ayant de 4 à 9 atomes de carbone et comprenant, le cas échéant, les additifs habituels, **caractérisés en ce que** lesdits matériaux composites puissent être obtenus selon la méthode qui consiste à:
(a) produire une masse en fusion de lactame 12 anionique activée;
(b) alors que ladite masse se trouve en état fluide, y faire pénétrer ou l'imprégner avec la structure fibreuse et déclencher la polymérisation, en sorte qu'elle puisse former la matrice pour un matériau composite ou une pièce à mouler composite, en opérant dans une gamme de température telle que la masse fluide de lactame se dissolve directement dans la masse fluide de polymère;
(c) polymériser la masse en fusion activée en influant sur la température et éventuellement la pression;
(d) soumettre éventuellement la pièce à mouler à une étape de moulage sous influence de la température et de la pression.

2. Matériaux composites thermoplastiques thermoformables, stables dans leurs dimensions et peu contractiles, constitués de fibres de renforcement présentes dans une matrice de polyamide 12, elle-même constituée de lactames lauriques anioniques polymérisées comprenant jusqu'à 15% en poids de comonomères de lactames ayant de 4 à 9 atomes de carbone et le cas échéant des additifs habituels, **caractérisés en ce que** lesdits matériaux composites puissent être obtenus selon la méthode qui consiste à:
(a) mettre en contact étroit sous forme solide la structure fibreuse et un mélange poudreux de fines particules de lactame 12, comprenant l'activateur et le catalyseur en des concentrations appropriées pour le procédé, faire fondre le mélange poudreux en influant sur la température et la pression, en sorte que l'on obtienne une masse en fusion de lactame 12 anionique activée;
(b) alors que ladite masse se trouve en état fluide, y faire pénétrer la structure fibreuse et déclencher la polymérisation, en sorte qu'elle puisse former la matrice pour une pièce à mouler, en opérant dans une gamme de température telle que la masse fluide de lactame se dissolve directement dans la masse fluide de polymère;
(c) effectuer une polymérisation en influant sur la température et éventuellement la pression;
(d) soumettre éventuellement la pièce à mouler à une étape de moulage sous influence de la température et de la pression.

3. Matériaux composites selon la revendication 1 ou 2, **caractérisés en ce que** les fibres sont des filaments continus.

4. Matériaux composites selon l'une quelconque des revendications 1 à 3, **caractérisés en ce qu'**ils contiennent de 25 à 60% en volume de fibres de renforcement.

5. Matériaux composites selon l'une quelconque des revendications 1 à 4, **caractérisés en ce qu'**ils contiennent de 45 à 55% en volume de fibres de renforcement.

6. Procédé de production des matériaux composites selon l'une quelconque des revendications 1 à 5, **caractérisé en ce qu'**il comprend les étapes suivantes:
(a) produire une masse en fusion de lactame 12 anionique activée;
(b) alors que ladite masse se trouve en état fluide, y faire pénétrer ou l'imprégner avec la structure fibreuse et déclencher la polymérisation, en sorte qu'elle puisse former la matrice pour un matériau composite ou une pièce à mouler composite, en opérant dans une gamme de température telle que la masse fluide de lactame se dissolve directement dans la masse fluide de polymère;
(c) polymériser la masse en fusion activée en influant sur la température et éventuellement la pression;
(d) soumettre éventuellement la pièce à mouler à une étape de moulage sous influence de la température et de la pression.

7. Procédé de production des matériaux composites thermoplastiques thermoformables selon l'une quelconque des revendications 1 à 5, **caractérisé en ce qu'**il comprend les étapes suivantes:
(a) mettre en contact étroit sous forme solide la structure fibreuse et un mélange poudreux de fines particules de lactame 12, comprenant l'activateur et le catalyseur en des concentrations appropriées pour le procédé, faire fondre le mélange poudreux en influant sur la température et la pression, en sorte que l'on obtienne une masse en fusion de lactame 12 anionique activée;
(b) alors que ladite masse se trouve en état fluide, y faire pénétrer la structure fibreuse et déclencher la polymérisation, en sorte qu'elle puisse former la matrice pour une pièce à mouler, en opérant dans une gamme de température telle que la masse fluide de lactame se dissolve directement dans la masse fluide de polymère;
(c) effectuer une polymérisation en influant sur la température et éventuellement la pression;
(d) soumettre éventuellement la pièce à mouler à une étape de moulage sous influence de la température et de la pression.

8. Procédé selon l'une des revendications précédentes 6 ou 7, **caractérisé en ce que** l'on augmente la température de la masse en fusion ou du mélange immédiatement après y avoir fait pénétrer la structure fibreuse ou, le cas échéant, immédiatement après l' avoir imprégné avec la structure fibreuse, de telle sorte que la température soit supérieure à la température de fusion de la masse anionique polymérisée, mais ne dépasse pas 300°C.

9. Procédé selon l'une quelconque des revendications précédentes 6 à 8, **caractérisé en ce que** l'on utilise un moule ou un outil à former et, le cas échéant, **en ce que** l'on procède à l'évacuation du moule ou de l'outil à former.

10. Procédé selon l'une quelconque des revendications 6 à 8, **caractérisé en ce que** l'on opère sous atmosphère gazeuse contrôlée.

11. Procédé selon la revendication 10, **caractérisé en ce que** lors de l'étape de préparation du mélange ou de la masse en fusion on opère sous atmosphère sèche en azote pour l'imprégnation et le moulage.

12. Procédé selon l'une quelconque des revendications 6 à 11, **caractérisé en ce que** le moulage est effectué selon le procédé de pultrusion, le procédé «Resin-transfer-Molding» ou le procédé «Rotomolding», ou selon la technique dite «Pre-Preg».

13. Procédé selon l'une quelconque des revendications 6 à 12, **caractérisé en ce que** l'on soude thermiquement, en influant sur la température et sur la pression, des pièces à mouler selon l'une quelconque des revendications 1 à 5 avec des pièces à mouler en polyamide 12 ou, le cas échéant, avec des pièces à mouler ayant une matrice de polyamide 12, lesdites pièces à mouler étant obtenues selon le procédé de polymérisation anionique ou par hydrolyse.

14. Utilisation des matériaux composites thermoplastiques thermoformables constitués de fibres de renforcement présentes dans une matrice de polyamide 12 selon l'une quelconque des revendications 1 à 5 pour la fabrication de conduites de protection, éléments de protection, éléments supports, éléments de châssis porteurs de charges, éléments de couverture, constructions en forme de cage, constructions pour systèmes de transmission, toitures en matériaux légers, composants pour l'industrie du bâtiment, composants pour des articles de sport et des éléments de machines, qui sont soumis à des forces accélératrices élevées, éléments structurels de la construction navale et de bateaux, éléments de carrosserie et de revêtement dans l'industrie automobile, tuyaux pour le transport de médias et tuyaux de protection, plus spécialement pour le domaine électrique.
